(19) Europäisches Patentamt
European Patent Office
Office européen des brevets

(11) **EP 3 843 189 B1**

(12) **EUROPÄISCHE PATENTSCHRIFT**

(45) Veröffentlichungstag und Bekanntmachung des Hinweises auf die Patenterteilung:
**21.09.2022   Patentblatt 2022/38**

(21) Anmeldenummer: **19219241.7**

(22) Anmeldetag: **23.12.2019**

(51) Internationale Patentklassifikation (IPC):
**H01M 8/04089** (2016.01)   **H01M 8/04082** (2016.01)
**H01M 8/04225** (2016.01)   **H01M 8/04223** (2016.01)
**H01M 8/0612** (2016.01)   **H01M 8/10** (2016.01)

(52) Gemeinsame Patentklassifikation (CPC):
**H01M 8/04225; H01M 8/04089; H01M 8/04216; H01M 8/04253; H01M 8/0618;** H01M 2008/1095; H01M 2250/20; Y02E 60/50; Y02T 90/40

(54) **VORRICHTUNG ZUM BETRIEB EINES EXOTHERMEN WASSERSTOFFABNEHMERS MIT METALLHYDRIDSPEICHER**

APPARATUS FOR OPERATING AN EXOTHERMIC HYDROGEN CONSUMER WITH METAL HYDRIDE STORAGE

DISPOSITIF DE FONCTIONNEMENT D'UN CONSOMMATEUR EXOTHERMIQUE D'HYDROGÈNE AVEC STOCKAGE D' HYDRURE MÉTALLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.06.2021   Patentblatt 2021/26**

(73) Patentinhaber:
• **Helmholtz-Zentrum hereon GmbH**
  **21502 Geesthacht (DE)**
• **PANCO GmbH**
  **56218 Mülheim-Kärlich (DE)**

(72) Erfinder:
• **Bellosta von Colbe, José M.**
  **21465 Wentorf (DE)**
• **Klassen, Thomas**
  **21465 Wentorf (DE)**
• **Dornheim, Martin**
  **21391 Reppenstedt (DE)**
• **Jepsen, Julian**
  **22397 Hamburg (DE)**
• **Taube, Klaus**
  **22549 Hamburg (DE)**
• **Platzek, Dieter**
  **56218 Mülheim-Kärlich (DE)**
• **Puszkiel, Julián**
  **08003 Barcelona (ES)**

(74) Vertreter: **Uexküll & Stolberg Partnerschaft von Patent- und Rechtsanwälten mbB Beselerstraße 4 22607 Hamburg (DE)**

(56) Entgegenhaltungen:
**EP-A2- 1 468 722**

• SAKINTUNA ET AL: "Metal hydride materials for solid hydrogen storage: A review", INTERNATIONAL JOURNAL OF HYDROGEN ENERGY, ELSEVIER SCIENCE PUBLISHERS B.V., BARKING, GB, Bd. 32, Nr. 9, 23. Mai 2007 (2007-05-23), Seiten 1121-1140, XP022093235, ISSN: 0360-3199, DOI: 10.1016/J.IJHYDENE.2006.11.022
• MILA KÖLBIG ET AL: "Characterization of metal hydrides for thermal applications in vehicles below 0 °C", INTERNATIONAL JOURNAL OF HYDROGEN ENERGY., Bd. 44, Nr. 10, 18. Januar 2019 (2019-01-18), Seiten 4878-4888, XP055707081, GB ISSN: 0360-3199, DOI: 10.1016/j.ijhydene.2018.12.116

EP 3 843 189 B1

**Beschreibung**

GEBIET DER ERFINDUNG

Die Erfindung betrifft eine Kaltstartvorrichtung mit Metallhydridspeicher für exothermen Wasserstoffabnehmer wie eine Brennstoffzelle sowie ein Verfahren zum Betrieb eines solchen exothermen Wasserstoffabnehmers.

HINTERGRUND DER ERFINDUNG

Bei der Elektrolyse von Wasser werden Wassermoleküle durch elektrischen Strom in Wasserstoff ($H_2$) und Sauerstoff ($O_2$) zerlegt. In einer Brennstoffzelle läuft dieser Vorgang in umgekehrter Richtung ab. Durch die elektrochemische Verbindung von Wasserstoff ($H_2$) und Sauerstoff ($O_2$) zu Wasser wird die frei werdende Energie mit hohem Wirkungsgrad zu elektrischem Strom umgewandelt.

Die technische Umsetzung des Prinzips der Brennstoffzelle hat zu unterschiedlichen Lösungen, und zwar mit verschiedenartigen Elektrolyten und mit Betriebstemperaturen zwischen 10°C und 1000°C, geführt. In Abhängigkeit von ihrer Betriebstemperatur werden die Brennstoffzellen in Niedertemperatur-, Mitteltemperatur- und Hochtemperatur-Brennstoffzellen eingeteilt (siehe z.B. DE 198 36 352 A1). Niedertemperatur-Brennstoffzellen arbeiten bei vergleichsweise moderaten Betriebstemperaturen von 60°C bis 120°C und eignen sich auf Grund der moderaten Temperaturen insbesondere für mobile Anwendungen wie zum Betrieb eines Kraftfahrzeugs. In Kraftfahrzeugen wird die Brennstoffzelle des Typs Niedertemperatur-PEM bevorzugt eingesetzt und bei Temperaturen zwischen 60°C und 90°C betrieben.

Der als Brennstoff erforderliche Wasserstoff wird üblicherweise aus einem Drucktank bereitgestellt, da mit diesem Wasserstoff im gesamten Betriebstemperaturbereich zur Verfügung gestellt werden kann. Diese Drucktanks sind aber vergleichsweise voluminös, so dass die Reichweite von mobilen Anwendungen wie beim Betrieb eines Kraftfahrzeugs durch den zur Verfügung stehenden, limitierten Speicherraum eingeschränkt wird. Es ist bekannt, dass auf der Basis von Metallhydriden Wasserstoffspeicher, sogenannte Metallhydrid-Speicher, gebildet werden können, die sehr viel weniger Platz bei gleicher Kapazität beanspruchen. Allerdings muss Metallhydrid-Speichern zur Desorption von Wasserstoff in der Regel Wärme zugeführt werden; bei der Absorption von Wasserstoff muss Wärme abgeführt werden. In Abhängigkeit vom Metallhydrid sind für die Wasserstoffdesorption Temperaturen zwischen -30°C und 400°C erforderlich. Im Allgemeinen sind aber Wasserstoffdrücke von weniger als 10 MPa notwendig, die zum Betrieb einer Brennstoffzelle ausreichen, was die Konstruktion dieser Tanks gegenüber Wasserstoffdrucktanks erheblich vereinfacht.

Auch als Wasserstoffspeicher verwendete Metallhydride werden, je nach Desorptionstemperatur in verschiedene Kategorien eingeteilt. Eine Übersicht über gängige Metallhydride und ihre Eigenschaften findet sich in B. Sakintuna et al. "Metal hydride materials for solid hydrogen storage: A review", International Journal of Hydrogen Energy, Vol. 32 (2007), 1121-1140, auf die hier Bezug genommen wird. Wasserstoff wird nach der Gleichung:

$$\texttt{Metall + Wasserstoff} \leftrightarrow \texttt{Metallhydrid + Wärme}$$

in das Metallgitter eingelagert (absorbiert) respektive aus dem Hydrid gelöst (desorbiert). Der Zusammenhang zwischen Druck, Temperatur und Wasserstoffkonzentration im Metall wird als Konzentration-Druck-Isotherme (KDI) dargestellt. Wasserstoff wird bei einer bestimmten Temperatur unter Erhöhung des Drucks im Metallgitter gelöst. Dieser Vorgang gehorcht dem Sieverts'schen Gesetz, bis eine Sättigungskonzentration erreicht ist ($\alpha$-Phase). Danach steigt die Konzentration im Metall ohne Druckanstieg - die Hydridphase ($\beta$-Phase) wird gebildet. Dieser Plateaubereich gehorcht sowohl dem van't-Hoff'schen Gesetz als auch der Gibbs'schen Phasenregel. Am Plateauende steigt der Druck wieder quadratisch an und Wasserstoff wird in der Hydridphase nach dem Sieverts'sehen Gesetz gelöst. Zum Vergleich verschiedener Hydride hat es sich eingebürgert, ausgehend von den Gleichgewichtswerten in der Plateaumitte van't-Hoff-Diagramme zu konstruieren. Aus der Steigung der Geraden lässt sich die Reaktionsenthalpie für die Wasserstoffabsorptionsreaktion ($\Delta H_{abs}$) ablesen.

Bei Mitteltemperaturhydriden beginnt die Desorption bei einem Normaldruck von 10 kPa zwischen 100°C und 200°C. Mitteltemperaturhydride sind definiert durch eine absolute Reaktionsenthalpie ($\Delta H_{abs}$) für die Wasserstoffabsorptionsreaktion zwischen 30 kJ/mol $H_2$ und 65 kJ/mol $H_2$. In der Regel weisen sie eine Speicherdichte für Wasserstoff von ca. 2,5 Gew.-% bis 5 Gew.-% auf Basis des zugrundeliegenden Metalls auf. Zu den Mitteltemperaturhydriden zählen u.a. Alanate wie $NaAlH_4$ und Amide wie $LiNH_2$ mit einer $H_2$-Aufnahmefähigkeit von bis zu 4,5 Gew.-%. Die optimale Wasserstoffaufnahmetemperatur liegt z.B. für Natriumalanat bei ca. 125°C und die Wasserstoffabgabetemperatur bei 160 bis 185°C. Mitteltemperaturhydride sind aufgrund der relativ hohen Wasserstoffspeicherkapazität und relativ niedrigen Betriebstemperaturen interessante Kandidaten für mobile Anwendungen.

Bei Hochtemperaturhydriden beginnt die Desorption bei einem Normaldruck von 10 kPa über 200°C. Sie sind definiert durch eine absolute Reaktionsenthalpie $\Delta H_{abs}$ für die Wasserstoffabsorptionsreaktion von mehr als 65 kJ/mol

$H_2$. Sie haben in der Regel eine noch höhere Speicherdichte für Wasserstoff von ca. 7 Gew.-% bis 15 Gew.-% auf Basis des zugrundeliegenden Metalls. Oft aus Leichtmetallen (Magnesium, Aluminium) und/oder Nichtmetallen (Stickstoff, Bor) gebildet, wären sie für den Einsatz bei Brennstoffzellen und $H_2$-Verbrennungsmotoren aufgrund der hohen Kapazitäten möglicherweise geeignet, doch die hohen Temperaturen sind ein Hindernis für deren Verwendung als Speicher für Brennstoffzellen. Hochtemperaturhydride werden für den Einsatz bei Brennstoffzellen und $H_2$-Verbrennungsmotoren daher zurzeit nicht eingesetzt.

Niedertemperaturhydride mit einer Desorptionstemperatur bei einem Normaldruck von 10 kPa zwischen -40°C und unter 100°C werden auf Grund ihrer relativ niedrigen gewichtsbezogenen Speicherkapazität für Wasserstoff von weniger als 2 Gew.-% nur sehr speziell für mobile Anwendungen, insbesondere für Prototypen von Gabelstaplern und Fahrrädern verwendet, bei denen eine geringe Speicherkapazität in Kauf genommen werden kann. Sie sind definiert durch eine absolute Reaktionsenthalpie $AH_{abs}$ für die Wasserstoffabsorptionsreaktion von weniger als 30 kJ/mol $H_2$.

Für die allgemeine Anwendung von Metallhydrid-Speichern benötigt man daher ein externes Heizsystem, das den Metallhydrid-Speicher zu seiner Entladung beheizt. Die zur Heizung des Metallhydrid-Speichers erforderliche Energie wird bislang in der Regel aus der Brennstoffzelle oder einer anderen Wärmequelle entnommen. Eine Entnahme der erforderlichen Energie für die Entladung eines Metallhydrid-Speichers ist jedoch nicht beim Start der Brennstoffzelle und in den ersten Minuten ihres Betriebs möglich, wenn sie noch nicht ausreichend Wärme für die Beheizung des Metallhydrid-Speichers bereitstellt. Des Weiteren können die aus der Praxis bekannten Brennstoffzellen erst ab einer bestimmten Starttemperatur Strom für externe Nutzung produzieren. Bei einem Kaltstart oder einem Sofortstart muss eine Brennstoffzelle also zunächst auf Temperaturen oberhalb der Starttemperatur erwärmt werden. Aufgrund der großen thermischen Masse der Brennstoffzellen ist dazu eine beträchtliche Heizleistung erforderlich, insbesondere wenn der Kaltstart in ähnlich kurzen Zeiten erfolgen soll, wie bei herkömmlichen Verbrennungsmotoren.

Gleiches gilt auch für die Versorgung einer Brennstoffzelle mit Wasserstoff aus Reformern, die Brennstoffe wie Methanol, Ammoniak, Ameisensäure oder LOHCs ("Liquid Organic Hydrogen Carrier") verwenden. Zum Start der Brennstoffzelle mittels einem Reformer wird auch hier noch nicht im System verfügbare Energie benötigt.

Aus der DE 103 17 123 B4 ist eine Brennstoffzelle für einen mobilen Einsatz mit einer Kaltstartvorrichtung bekannt, die einen Wasserstoff-Drucktank als Wasserstoffspeicher sowie Metallhydrid-Heizeinrichtung umfasst. Wasserstoff aus dem Druckgastank wird über den desorbierten Metallhydridspeicher geleitet. Dieser erwärmt sich bei der Bildung des entsprechenden Metallhydrids und verbessert damit die Leistungsfähigkeit des Brennstoffzellensystems. Allerdings ist bei der aus der DE 103 17 123 B4 bekannten Kaltstartvorrichtung die Anzahl der Kaltstartvorgänge und der Sofortstartvorgänge durch die Größe des Druckspeichers begrenzt, weil der Druckspeicher bei jedem Kalt- und Sofortstart sukzessive entladen und nicht automatisch wieder beladen wird. Somit bietet dieses System nur eine verbesserte Funktion von einem drucktankbasierten Speicher, der auch ohne diese Vorrichtung kalt- und sofortstartfähig ist.

I. Bürger et al. "Advanced reactor concept for complex hydrides: Hydrogen absorption from room temperature" International Journal of Hydrogen Energy, Vol. 39 (2014), Seiten 7030-7041 offenbart eine Kombination aus einem komplexen Hydrid (CxH) und einem Raumtemperaturhydrid (MeH) in einem Tank unter Ausnutzung der hohen Beladungskapazität der komplexen Hydride und der hohen Reaktionsgeschwindigkeit der Raumtemperaturhydride, um die Kaltstarteigenschaften zu verbessern. Das Raumtemperaturhydrid wird beim Kaltstart mit Wasserstoff beladen und erwärmt sich durch die exotherme Reaktion. Dadurch erwärmt es auch das komplexe Hydrid, welches somit langsam auf Betriebstemperatur gebracht wird, Wasserstoff abgibt und damit die Brennstoffzelle mit Wasserstoff versorgt. Durch diese Reaktionskaskade von Raumtemperaturhydrid und komplexem Hydrid und der langsamen Erwärmung des komplexen Hydrids ist das System vergleichsweise träge. Darüber hinaus ist in der Druckschrift nicht beschrieben, wie die Beladung des Raumtemperaturhydrids erfolgen soll.

M. Kölbig et al. "Characterization of metal hydrides for thermal applications in vehicles below 0 °C", International Journal of Hydrogen Energy, Vol. 44 (2019), Seiten 4878-4888 betrachtet die Be- und Entladung eines geschloseenen Systems aus $LaNi_{4.85}Al_{0.15}$ als Wärme erzeugendes Metallhydrid und HYDRALLOY C5® ($Ti_{0.95}Zr_{0.05}Mn_{1.46}V_{0.45}Fe_{0.09}$) als Hydrid lieferndes Metallhydrid unterhalb von 0°C. Dokument DE 10 2008 002 624 A1 offenbart ein Wasserstoffspeicherungssystem für ein Brennstoffzellenfahrzeug, wobei das Wasserstoffspeicherungssystem aufweist: einen äußeren Raum, der mit einem ersten Speicherlegierungspulver gefüllt ist, mittels welchem der Wasserstoff bei einer hohen Temperatur freisetzbar ist; einen inneren Raum, der mit einem zweiten Speicherlegierungspulver gefüllt ist, mittels welchem der Wasserstoff nur mit der von einem Brennstoffzellenblock erzeugten Wärme freisetzbar ist; einen Metallfilter, der zwischen dem äußeren und inneren Raum angeordnet ist, so dass der äußere und innere Raum geteilt ist; ein zweites Wärmetauschrohr, das zwischen dem Brennstoffzellenblock und einem Kühler vorgesehen ist, um einen Kühlkreis zu bilden und entlang einer längs laufenden Richtung des inneren Raums angeordnet ist; und einen unabhängigen Wärmetauschkreis, der unabhängig mit dem äußeren Raum für die Wasserstofffreisetzung des ersten Speicherlegierungspulvers verbunden ist.

Das Dokument EP 1 468 722 A2 offenbart eine Kombination eines Reformers mit zwei Hydridspeichern um bei dem Kaltstart einer Verbrennungsmaschine deren Emissionen zu vermindern.

Alle oben genannten Systeme beruhen darauf, dass die Brennstoffzelle durch ein Metallhydrid gespeist wird, das vor Inbetriebnahme durch eine andere Quelle erwärmt wird. Erst nach dem Aufheizen des Metallhydrids kann die Brennstoffzelle betrieben werden. Aufgabe der vorliegenden Erfindung ist es, eine effiziente Kaltstartvorrichtung für einen exothermen Wasserstoffabnehmer wie eine Brennstoffzelle zur Verfügung zu stellen, der sofort in Betrieb genommen werden kann und keinen Drucktank oder externe Wasserstoffquelle benötigt, die auf Grund des begrenzten zur Verfügung stehenden Raums z.B. in Personenkraftwagen nachteilig sind. Des Weiteren soll die Kaltstartvorrichtung für eine Zahl von Startvorgängen zur Verfügung stehen, die unabhängig von seiner Speicherkapazität ist.

ZUMSAMMENFASSUNG DER ERFINDUNG

Erfindungsgemäß wird diese Aufgabe durch eine Vorrichtung zum Betrieb eines exothermen Wasserstoffabnehmers wie einer Brennstoffzelle mit den in Anspruch 1 genannten Merkmalen gelöst. Ebenfalls wird diese Aufgabe durch ein Verfahren nach Anspruch 7 gelöst.

Bevorzugte Ausführungsformen der Erfindung sind in den Unteransprüchen wiedergegeben.

Eine erste Ausführungsform der Erfindung betrifft eine Vorrichtung zum Betrieb eines exothermen Wasserstoffabnehmers wie einer Brennstoffzelle, wobei die Vorrichtung den exothermen Wasserstoffabnehmer, wenigstens einen Startertank, der ein erstes Metallhydrid mit Kaltstarteigenschaften umfasst, sowie mindestens einen Betriebstank, der wenigstens ein zweites Metallhydrid mit einer absoluten Reaktionsenthalpie für die Wasserstoffabsorptionsreaktion ($\Delta H_{abs}$) kleiner als 80 kJ/mol $H_2$, bevorzugt zwischen 20 kJ/mol $H_2$ und kleiner als 65 kJ/mol $H_2$, das bei einer Temperatur von -40°C einen Gleichgewichtsdruck für die Desorption von Wasserstoff von unter 100 kPa aufweist, oder mindestens einen Reformer umfasst, wobei der Startertank mit dem exothermen Wasserstoffabnehmer und dem Betriebstank bzw. dem Reformer in Strömungsverbindung steht, wobei das erste Metallhydrid mit Kaltstarteigenschaften bei einer Temperatur von -40°C einen Gleichgewichtsdruck für die Desorption von Wasserstoff von mindestens 100 kPa aufweist, und der Startertank weiterhin eine Kühlung umfasst, um bei Versorgung des exothermen Wasserstoffabnehmers durch den Betriebstank bzw. den Reformer mit Wasserstoff beladen werden zu können.

Bevorzugt ist der exotherme Wasserstoffabnehmer eine Brennstoffzelle, die wenigstens eine Kathode und wenigstens eine Anode mit einem dazwischen angeordneten Elektrolyten umfasst. Am meisten bevorzugt ist der exotherme Wasserstoffabnehmer eine PEM-Brennstoffzelle, z.B. eine Niedertemperatur-PEM-Brennstoffzelle.

Bevorzugt ist der Startertank sphärisch oder zylindrisch ausgebildet. In einer Ausführungsform der Erfindung ist das Metallhydrid des Startertanks eines auf Basis einer Titan-Chrom-Mangan-Legierung.

Eine zweite Ausführungsform der Erfindung betrifft ein Verfahren zum Betrieb eines exothermen Wasserstoffabnehmers wie einer Brennstoffzelle, wobei der exotherme Wasserstoffabnehmer zunächst mit Wasserstoff aus mindestens einem Startertank gespeist wird, der ein erstes Metallhydrid umfasst, das bei einer Temperatur von -40°C einen Gleichgewichtsdruck für die Desorption von mindestens 100 kPa aufweist, und nach Erreichen der Betriebstemperatur des exothermen Wasserstoffabnehmers mit Wasserstoff aus mindestens einem Betriebstank, der wenigstens ein zweites Metallhydrid mit einer absoluten Reaktionsenthalpie für die Wasserstoffabsorptionsreaktion ($\Delta H_{abs}$) kleiner als 80 kJ/mol $H_2$, bevorzugt zwischen 20 kJ/mol $H_2$ und kleiner als 65 kJ/mol $H_2$ umfasst, das bei einer Temperatur von -40°C einen Gleichgewichtsdruck für die Desorption von Wasserstoff von unter 100 kPa aufweist, oder einem Reformer gespeist wird, und das Metallhydrid des Startertanks bei gleichzeitiger Versorgung des Wasserstoffabnehmers durch den zweiten Betriebstank bzw. den Reformer gekühlt wird, um mit Wasserstoff daraus beladen zu werden.

Wie erwähnt wird der Wasserstoffabnehmer zunächst mit Wasserstoff aus dem Startertank gespeist, wobei der Startertank bevorzugt wenigstens ein Metallhydrid umfasst, das bei einer Temperatur von -40°C einen Gleichgewichtsdruck für die Desorption von mindestens 300 kPa, noch bevorzugter mindestens 1000 kPa und insbesondere mindestens 1300 kPa aufweist, was insbesondere für Brennstoffzellen vorteilhaft ist, die im Rezirkulationsmodus betrieben werden.

Mit dem erfindungsgemäßen Verfahren wird ein exothermer Wasserstoffabnehmer wie eine Brennstoffzelle bei Kaltstartbedingungen mit ausreichend Wasserstoff aus dem Startertank versorgt, sodass der exotherme Wasserstoffabnehmer gestartet wird und sich auf Betriebstemperatur erwärmen kann. Mit der Abwärme oder der elektrischen Leistung, wenn vorhanden, des exothermen Wasserstoffabnehmers - wie einer Brennstoffzelle - wird dann der Betriebstank oder der Reformer als Hauptwasserstoff-Speicher ebenfalls auf seine Betriebstemperatur erwärmt und übernimmt die Versorgung des Wasserstoffabnehmers mit Wasserstoff. Bei Versorgung des Wasserstoffabnehmers durch den Betriebstank bzw. den Reformer wird der Startertank wieder mit Wasserstoff aus dem Betriebstank oder dem Reformer beladen. Dazu ist es erforderlich, dass der Startertank gekühlt wird, beispielsweise mittels Peltier-Elementen. Durch die Kühlung sinkt der Gleichgewichtsdruck des ersten Metallhydrids im Startertank, und dieser kann dann mit Wasserstoff aus dem Hauptspeicher (Betriebstank bzw. Refomer) wieder beladen werden, sodass nach Abschalten des exothermen Wasserstoffabnehmers ein erneuter Startvorgang erfolgen kann. Dazu ist erforderlich, dass der Startertank zwischen Wasserstoffabnehmer und Betriebstank geschaltet ist bzw. Startertank, Wasserstoffabnehmer und Betriebstank so angeordnet sind, dass der Wasserstoff vom Startertank zum Abnehmer aber auch (in getrennter Schaltungsform) vom Betriebstank zum Starttank fließen kann.

Das beschriebene Verfahren, um den Startertank während des Betriebs des exothermen Wasserstoffabnehmers wieder zu beladen, ermöglicht gegenüber bisherigen Lösungen eine wesentliche höhere, nicht vom Volumen des Startertanks beschränkte Anzahl von Kaltstartvorgängen, und ist somit - neben der vereinfachten Konstruktion der Vorrichtung zum Betrieb beispielsweise einer Brennstoffzelle - ein Vorteil der Erfindung. Außerdem ermöglicht die erfindungsgemäße Lösung den Einsatz einer sehr preisgünstigen Speicherlösung für den Hauptwasserstoff-Speicher, ohne dass dieser selbst Kalt- und/oder Sofortstarteigenschaften aufweisen muss. Dadurch können Metallhydride mit höherem Wirkungsgrad oder andere, preisgünstige und nicht kalt- und/oder sofortstartfähige Wasserstoffversorgungseinrichtungen (wie z.B. Reformer) verwendet werden. Mit der erfindungsgemäßen Vorrichtung und dem erfindungsgemäßen Verfahren wird die Bereitstellung von Wasserstoff für den Betrieb des exothermen Wasserstoffabnehmers - besonders bei niedrigen Temperaturen und z.B. als Brennstoffzelle für automotive Anwendungen - ohne Verzögerung gewährleistet, ebenso wie bei einem Drucktank - jedoch ohne dessen aufwändige Konstruktion und mit sehr viel geringerem Raumbedarf.

Gemäß einer weiteren Ausführungsform der Erfindung weist der Startertank eine Umhüllung des darin enthaltenen ersten Metallhydrids auf, die Wasserstoff-Drücke bis zum maximalen Gleichgewichtsdruck des Hydrids bei Betriebstemperatur des exothermen Wasserstoffabnehmers wie einer Brennstoffzelle oder die maximale Betriebstemperatur einer externen Heizung, bevorzugt die Peltierelementkühlung, die in umgepolter Schaltung als Heizung fungieren kann, widerstehen kann. Bevorzugt für die Umhüllung des ersten Metallhydrid-Speichers sind Super-Duplex-Stähle oder faserverstärkte Komposite. Je niedriger der Gleichgewichtsdruck bei der Betriebstemperatur des exothermen Wasserstoffabnehmers - mithin der maximal im System möglichen Temperatur - desto dünner und leichter kann die Umhüllung des ersten Metallhydrid-Speichers sein.

Gemäß einer noch weiteren Ausführungsform der Erfindung umfasst die Vorrichtung zum Betrieb eines exothermen Wasserstoffabnehmers wie einer Brennstoffzelle ein Kühlsystem, das den Startertank bei seiner Wiederbeladung kühlt, sobald der Betriebstank bzw. der Reformer die Versorgung der Brennstoffzelle übernommen hat. Peltierelemente haben hier den Vorteil, extrem platzsparend zu sein und eine direkte Kühlung der Hülle über Wärmeleitung zu ermöglichen oder durch Kopplung mit einem Wärmetauscher das Tanksystem über innenliegende Kühlkanäle zu kühlen. Außerdem sind auf Peltierelemente basierende Systeme wartungsfrei, da sie keine bewegliche Teile enthalten. Und zuletzt sind sie leicht reversibel (Kühlung kann auch durch Umpolung der elektrischen Polen als Heizung verwendet werden). Alternativ kann auch eine konventionelle, kompressorbasierte Kühlung verwendet werden, vorzugsweise eine, die auch reversibel (als Heizung funktionierend) ist.

Bevorzugt ist das Metallhydrid des Startertanks so ausgewählt, dass Wasserstoff bei Froststartbedingungen wie -40°C oder bei ähnlich niedrigen Temperaturen desorbiert wird. Sollte ein Metallhydrid mit einer höheren Desorptionstemperatur gewählt werden, so kann im Bedarfsfall, z.B. bei extrem niedrigen Temperaturen, eine Wärmeübertragung aus der Umgebung vorgesehen werden, z.B. durch als Heizung funktionierende Peltierelemente, durch eine konventionelle separate Heizung oder durch das Kühlmedium des exothermen Wasserstoffabnehmers, um die Wasserstoffdesorption dennoch zu ermöglichen.

Es ist vorteilhaft, dass die Wärmeübertragung durch einen niedrigen Versorgungsdruck des exothermen Wasserstoffabnehmers oder einen hohen Beladungs- und Betriebsdruck während des Betriebs herausgezögert wird, so dass erst zusätzliche Wärme benötigt wird, wenn das System ohnehin diese Wärme schon liefern kann.

Wenn nach dem durch den Startertank ermöglichten Betrieb der exotherme Wasserstoffabnehmer normale Betriebstemperatur erreicht hat (bei Niedertemperatur-PEM-Brennstoffzellen etwa 60°C bis 80°C), kann der Betriebstank bzw. der Reformer sowie ggf. weitere im Fahrzeug vorhandene Verbraucher wie eine Fahrzeuginnenraumheizung mit thermischer Energie aus der Abwärme der Brennstoffzelle versorgt werden. Ein weiterer Teil der Leistung - für gewöhnlich elektrische Leistung - des exothermen Wasserstoffabnehmers (z.B. weniger als 5%) wird nach Erreichen dieses Betriebszustandes dazu benutzt, um den Startertank über sein eigenes Kühlsystem zu kühlen.

Der Betriebstank bzw. Reformer ist bevorzugt so konstruiert, dass er bei seiner eigenen Betriebstemperatur, die nicht notwendigerweise dieselbe ist wie die des exothermen Wasserstoffabnehmers, einen höheren Wasserstoffdruck erzeugt, als der Gleichgewichtsdruck des kalten Startertanks. Damit kann der Startertank aus dem Betriebstank wieder beladen werden.

Die bei der Wiederbeladung des Startertanks in diesem entstehende Wärme wird bevorzugt abgeführt, um seinen Gleichgewichtsdruck konstant zu halten und eine Wiederbeladung des Startertanks zu ermöglichen. Sobald der Startertank voll beladen ist, kann die Kühlung abgeschaltet werden.

**Patentansprüche**

1. Vorrichtung zum Betrieb eines exothermen Wasserstoffabnehmers wie einer Brennstoffzelle, wobei die Vorrichtung den exothermen Wasserstoffabnehmer, wenigstens einen Startertank, der ein erstes Metallhydrid mit Kaltstarteigenschaften umfasst, sowie mindestens einen Betriebstank, der wenigstens ein zweites Metallhydrid mit einer absoluten Reaktionsenthalpie für die Wasserstoffabsorptionsreaktion ($\Delta H_{abs}$) kleiner als 80 kJ/mol $H_2$, das bei einer Temperatur von -40°C einen Gleichgewichtsdruck für die Desorption von Wasserstoff von unter 100 kPa aufweist, oder mindestens einen Reformer umfasst, wobei der Startertank mit dem exothermen Wasserstoffabnehmer und dem Betriebstank bzw. dem Reformer in Strömungsverbindung steht, wobei das erste Metallhydrid mit Kaltstarteigenschaften bei einer Temperatur von -40°C einen Gleichgewichtsdruck für die Desorption von Wasserstoff von mindestens 100 kPa aufweist, und der Startertank weiterhin eine Kühlung umfasst, um bei Versorgung des exothermen Wasserstoffabnehmers durch den Betriebstank bzw. den Reformer aus diesem mit Wasserstoff beladen werden zu können.

2. Vorrichtung nach Anspruch 1, **dadurch gekennzeichnet, dass** der exotherme Wasserstoffabnehmer eine Brennstoffzelle ist, die wenigstens eine Kathode und wenigstens eine Anode mit einem dazwischen angeordneten Elektrolyten umfasst.

3. Vorrichtung nach Anspruch 1 oder Anspruch 2, **dadurch gekennzeichnet, dass** der Startertank ein Metallhydrid umfasst, das bei einer Temperatur von -40°C einen Gleichgewichtsdruck für die Desorption von mindestens 300 kPa aufweist.

4. Vorrichtung nach Anspruch 3, **dadurch gekennzeichnet, dass** der Startertank ein Metallhydrid umfasst, das bei einer Temperatur von -40°C einen Gleichgewichtsdruck für die Desorption von mindestens 1300 kPa aufweist.

5. Vorrichtung nach einem der Ansprüche 1 bis 4, **dadurch gekennzeichnet, dass** das Metallhydrid des Startertanks eines auf Basis einer Titan-Chrom-Mangan-Legierung ist.

6. Vorrichtung nach einem der Ansprüche 1 bis 5, wobei die Kühlung des ersten Metallhydrid-Speichers durch ein Peltierelement oder durch eine kompressorbasierte Kühlung erfolgt.

7. Verfahren zum Betrieb eines exothermen Wasserstoffabnehmers wie einer Brennstoffzelle, wobei der exotherme Wasserstoffabnehmer zunächst mit Wasserstoff aus mindestens einem Startertank gespeist wird, der ein erstes Metallhydrid umfasst, das bei einer Temperatur von -40°C einen Gleichgewichtsdruck für die Desorption von mindestens 100 kPa aufweist, und nach Erreichen der Betriebstemperatur des exothermen Wasserstoffabnehmers mit Wasserstoff aus mindestens einem Betriebstank, der wenigstens ein zweites Metallhydrid mit einer absoluten Reaktionsenthalpie für die Wasserstoffabsorptionsreaktion ($\Delta H_{abs}$) kleiner als 80 kJ/mol $H_2$ umfasst, das bei einer Temperatur von -40°C einen Gleichgewichtsdruck für die Desorption von Wasserstoff von unter 100 kPa aufweist, oder einem Reformer gespeist wird, und das Metallhydrid des Startertanks - bei gleichzeitiger Versorgung des Wasserstoffabnehmers durch den zweiten Betriebstank bzw. dem Reformer - gekühlt wird, um mit Wasserstoff daraus beladen zu werden.

8. Verfahren nach Anspruch 7, **dadurch gekennzeichnet, dass** der exotherme Wasserstoffabnehmer eine Brennstoffzelle ist, die wenigstens eine Kathode und wenigstens eine Anode mit einem dazwischen angeordneten Elektrolyten umfasst.

9. Verfahren nach Anspruch 7 oder 8, wobei der Startertank ein Metallhydrid umfasst, das bei einer Temperatur von -40°C einen Gleichgewichtsdruck für die Desorption von Wasserstoff von mindestens 300 kPa aufweist.

10. Verfahren nach Anspruch 9, wobei der Startertank ein Metallhydrid umfasst, das bei einer Temperatur von -40°C einen Gleichgewichtsdruck für die Desorption von Wassersoff von mindestens 1000 kPa aufweist.

11. Verfahren nach Anspruch 10, wobei der Startertank ein Metallhydrid umfasst, das bei einer Temperatur von -40°C einen Gleichgewichtsdruck für die Desorption von Wasserstoff von mindestens 1300 kPa aufweist.

12. Verfahren nach einem der Ansprüche 7 bis 11, wobei das Metallhydrid des Startertanks eines auf Basis einer Titan-Chrom-Mangan-Legierung ist.

13. Verfahren nach einem der Ansprüche 7 bis 12, wobei die Kühlung des ersten Metallhydrid-Speichers durch ein Peltierelement oder durch eine kompressorbasierte Kühlung erfolgt.

14. Verfahren nach einem der Ansprüche 7 bis 13, wobei bei Versorgung des Wasserstoffabnehmers durch den Betriebstank bzw. den Refomer die Abwärme des Wasserstoffabnehmers dazu verwendet wird, um den Betriebstank bzw. den Refomer zu erwärmen.

**Claims**

1. An apparatus for operating an exothermic hydrogen consumer such as a fuel cell, wherein the apparatus comprises the exothermic hydrogen consumer, at least one starter tank comprising a first metal hydride having cold start properties and also at least one operating tank comprising at least one second metal hydride having an absolute reaction enthalpy for the hydrogen absorption reaction ($\Delta H_{abs}$) of less than 80 kJ/mol of $H_2$, which has an equilibrium pressure for the desorption of hydrogen at a temperature of -40°C of less than 100 kPa, or at least one reformer, wherein the starter tank is in fluidic communication with the exothermic hydrogen consumer and the operating tank or the reformer, wherein the first metal hydride having cold start properties has an equilibrium pressure for the desorption of hydrogen at a temperature of -40°C of at least 100 kPa and the starter tank further comprises a cooling device in order to be able to be loaded with hydrogen from the operating tank or reformer while the exothermic hydrogen consumer is being supplied by the operating tank or the reformer.

2. The apparatus as claimed in claim 1, **characterized in that** the exothermic hydrogen consumer is a fuel cell which comprises at least one cathode and at least one anode with an electrolyte arranged in between.

3. The apparatus as claimed in claim 1 or claim 2, **characterized in that** the starter tank comprises a metal hydride which has an equilibrium pressure for desorption at a temperature of -40°C of at least 300 kPa.

4. The apparatus as claimed in claim 3, **characterized in that** the starter tank comprises a metal hydride which has an equilibrium pressure for desorption at a temperature of -40°C of at least 1300 kPa.

5. The apparatus as claimed in any of claims 1 to 4, **characterized in that** the metal hydride of the starter tank is based on a titanium-chromium-manganese alloy.

6. The apparatus as claimed in any of claims 1 to 5, wherein the cooling of the first metal hydride store is effected by means of a Peltier element or by compressor-based cooling.

7. A method for operating an exothermic hydrogen consumer such as a fuel cell, wherein the exothermic hydrogen consumer is initially supplied with hydrogen from at least one starter tank comprising a first metal hydride which has an equilibrium pressure for desorption at a temperature of -40°C of at least 100 kPa and after attainment of the operating temperature of the exothermic hydrogen consumer is supplied with hydrogen from at least one operating tank comprising at least one second metal hydride having an absolute reaction enthalpy for the hydrogen absorption reaction ($\Delta H_{abs}$) of less than 80 kJ/mol of $H_2$, and has an equilibrium pressure for the desorption of hydrogen at a temperature of -40°C of less than 100 kPa, or a reformer, and the metal hydride of the starter tank is cooled in order to be loaded with hydrogen from the second operating tank or the reformer while the hydrogen consumer is simultaneously being supplied by the second operating tank or the reformer.

8. The method as claimed in claim 7, **characterized in that** the exothermic hydrogen consumer is a fuel cell which comprises at least one cathode and at least one anode with an electrolyte arranged in between.

9. The method as claimed in claim 7 or 8, wherein the starter tank comprises a metal hydride which has an equilibrium pressure for the desorption of hydrogen at a temperature of -40°C of at least 300 kPa.

10. The method as claimed in claim 9, wherein the starter tank comprises a metal hydride which has an equilibrium pressure for the desorption of hydrogen at a temperature of -40°C of at least 1000 kPa.

11. The method as claimed in claim 10, wherein the starter tank comprises a metal hydride which has an equilibrium pressure for the desorption of hydrogen at a temperature of -40°C of at least 1300 kPa.

12. The method as claimed in any of claims 7 to 11, wherein the metal hydride of the starter tank is based on a titanium-chromium-manganese alloy.

13. The method as claimed in any of claims 7 to 12, wherein the cooling of the first metal hydride store is effected by means of a Peltier element or by compressor-based cooling.

**14.** The method as claimed in any of claims 7 to 13, wherein the waste heat of the hydrogen consumer is used to heat the operating tank or the reformer while the hydrogen consumer is being supplied by the operating tank or the reformer.

**Revendications**

**1.** Dispositif destiné au fonctionnement d'un consommateur d'hydrogène exothermique tel qu'une pile à combustible, le dispositif comprenant le consommateur d'hydrogène exothermique, au moins un réservoir de démarrage qui comprend un premier hydrure métallique à propriétés de démarrage à froid, ainsi qu'au moins un réservoir de fonctionnement qui comprend au moins un deuxième hydrure métallique ayant une enthalpie de réaction absolue pour la réaction d'absorption d'hydrogène ($\Delta H_{abs}$) inférieure à 80 kJ/mole d'$H_2$, qui présente à une température de -40 °C une pression à l'équilibre pour la désorption d'hydrogène de moins de 100 kPa, ou au moins un reformeur, le réservoir de démarrage étant en connexion d'écoulement avec le consommateur d'hydrogène exothermique et le réservoir de fonctionnement ou le reformeur, le premier hydrure métallique à propriétés de démarrage à froid présentant à une température de -40 °C une pression à l'équilibre pour la désorption d'hydrogène d'au moins 100 kPa, et le réservoir de démarrage comprenant en outre un refroidissement afin de pouvoir, lors d'alimentation du consommateur d'hydrogène exothermique par le réservoir de fonctionnement ou le reformeur, être chargé avec de l'hydrogène à partir de celui-ci.

**2.** Dispositif selon la revendication 1, **caractérisé en ce que** le consommateur d'hydrogène exothermique est une pile à combustible qui comprend au moins une cathode et au moins une anode avec un électrolyte disposé entre celles-ci.

**3.** Dispositif selon la revendication 1 ou la revendication 2, **caractérisé en ce que** le réservoir de démarrage comprend un hydrure métallique qui présente à une température de -40 °C une pression à l'équilibre pour la désorption d'au moins 300 kPa.

**4.** Dispositif selon la revendication 3, **caractérisé en ce que** le réservoir de démarrage comprend un hydrure métallique qui présente à une température de -40 °C une pression à l'équilibre pour la désorption d'au moins 1 300 kPa.

**5.** Dispositif selon l'une quelconque des revendications 1 à 4, **caractérisé en ce que** l'hydrure métallique du réservoir de démarrage est un à base d'un alliage titane-chrome-manganèse.

**6.** Dispositif selon l'une quelconque des revendications 1 à 5, dans lequel le refroidissement du premier réservoir d'hydrure métallique s'effectue par un élément Peltier ou par un refroidissement à base de compresseur.

**7.** Procédé destiné au fonctionnement d'un consommateur d'hydrogène exothermique tel qu'une pile à combustible, dans lequel le consommateur d'hydrogène exothermique est en premier lieu alimenté avec de l'hydrogène à partir d'au moins un réservoir de démarrage qui comprend un premier hydrure métallique qui présente à une température de -40 °C une pression à l'équilibre pour la désorption d'au moins 100 kPa, et une fois atteinte la température de fonctionnement du consommateur d'hydrogène exothermique, est alimenté avec de l'hydrogène à partir d'au moins un réservoir de fonctionnement qui comprend au moins un deuxième hydrure métallique ayant une enthalpie de réaction absolue pour la réaction d'absorption d'hydrogène ($\Delta H_{abs}$) inférieure à 80 kJ/mole d'$H_2$, qui présente à une température de -40 °C une pression à l'équilibre pour la désorption d'hydrogène de moins de 100 kPa, ou un reformeur, et l'hydrure métallique du réservoir de démarrage - en cas d'alimentation simultanée du consommateur d'hydrogène par le deuxième réservoir de fonctionnement ou le reformeur - est refroidi, afin d'être chargé avec de l'hydrogène à partir de celui-ci.

**8.** Procédé selon la revendication 7, **caractérisé en ce que** le consommateur d'hydrogène exothermique est une pile à combustible qui comprend au moins une cathode et au moins une anode avec un électrolyte disposé entre celles-ci.

**9.** Procédé selon la revendication 7 ou 8, dans lequel le réservoir de démarrage comprend un hydrure métallique qui présente à une température de -40 °C une pression à l'équilibre pour la désorption d'hydrogène d'au moins 300 kPa.

**10.** Procédé selon la revendication 9, dans lequel le réservoir de démarrage comprend un hydrure métallique qui présente à une température de -40 °C une pression à l'équilibre pour la désorption d'hydrogène d'au moins 1 000 kPa.

**11.** Procédé selon la revendication 10, dans lequel le réservoir de démarrage comprend un hydrure métallique qui présente à une température de -40 °C une pression à l'équilibre pour la désorption d'hydrogène d'au moins 1 300 kPa.

**12.** Procédé selon l'une quelconque des revendications 7 à 11, dans lequel l'hydrure métallique du réservoir de démarrage est un à base d'un alliage titane-chrome-manganèse.

**13.** Procédé selon l'une quelconque des revendications 7 à 12, dans lequel le refroidissement du premier réservoir d'hydrure métallique s'effectue par un élément Peltier ou par un refroidissement à base de compresseur.

**14.** Procédé selon l'une quelconque des revendications 7 à 13, dans lequel lors de l'alimentation du consommateur d'hydrogène par le réservoir de fonctionnement ou le reformeur la chaleur dissipée du consommateur d'hydrogène est utilisée pour réchauffer le réservoir de fonctionnement ou le reformeur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19836352 A1
- DE 10317123 B4
- DE 102008002624 A1
- EP 1468722 A2

**In der Beschreibung aufgeführte Nicht-Patentliteratur**

- **B. SAKINTUNA et al.** Metal hydride materials for solid hydrogen storage: A review. *International Journal of Hydrogen Energy,* 2007, vol. 32, 1121-1140
- **I. BÜRGER et al.** Advanced reactor concept for complex hydrides: Hydrogen absorption from room temperature. *International Journal of Hydrogen Energy,* 2014, vol. 39, 7030-7041
- **M. KÖLBIG et al.** Characterization of metal hydrides for thermal applications in vehicles below 0 °C. *International Journal of Hydrogen Energy,* 2019, vol. 44, 4878-4888